# EUROPEAN PATENT APPLICATION

(11) **EP 3 993 464 A1**
(43) Date of publication of application: **04.05.2022**
(21) Application number: 20835536.2
(22) Date of filing: 01.07.2020
(51) Int. Cl.: H04W 8/08

(54) **METHOD FOR REDUCING NAS SIGNALING OF LCS AND LPP PROCEDURES**

(30) Priority: 01.07.2019 CN 201910585508
(71) Applicant: MediaTek Singapore Pte. Ltd., Singapore 138628 (SG)
(72) Inventor: SYUE, Syue-Ju, Shanghai 200232 (CN); NING, Tao, Shanghai 200232 (CN); NIEMI, Marko, Oulu (FI); HUANG-FU, Chien-Chun, Hsinchu City Taiwan 30078 (TW)
(74) Representative: Hoefer & Partner Patentanwälte mbB
(86) International application number: PCT/CN2020/099698
(87) International publication number: WO 2021/000887

(57) **Abstract**

The invention relates to a method for reducing NAS signaling of LCS and LPP procedures initiated by UE in EMM idle mode and EMM registration state. The disclosed method involves multiple methods of encapsulating LPP/LCS messages into control plane service requests. This makes it possible for the UE and eNB to transmit LPP/LCS messages during the RRC connection establishment procedure, and can be regarded as an extension of the control plane EPS CIoT optimization.

## Description

### Field of the Invention

The present invention relates to signal transmission in the narrowband Internet of things (NB-IOT), and, in particular, to a non-access stratum (NAS) transmission method of location services (LCS) and LTE positioning protocol (LPP).

### Description of the Related Art

Machine type communication (MTC), or more specifically, narrowband Internet of Things (NB-IoT), represents an important growth opportunity for the 3rd Generation Partnership Project (3GPP) ecosystem. NB-IoT is a low-power wide-area coverage radio technology standard formulated by 3GPP to support a wide range of IoT applications and services.

In order to support IoT, 3GPP has designated NB-IoT as one of the new cellular radio technologies. NB-IoT has inherited LTE common functions and has been simplified and optimized to provide lower power consumption, better coverage, and to support a large number of low throughput devices with loose latency requirements. The 3GPP work item CIoT-CT defines the phase 3 protocol aspects of CIoT based on the phase 2 standardization developed by SA2. CIoT-CT introduces the control plane CIoT EPS optimization function to support the efficient transmission of user data (IP, non-IP) or SMS messages on the control plane through mobility management entity (MME) without triggering the data radio bearer establishment.

Although the control plane CIoT EPS optimization enables the UE to transmit a small amount of user data through the control plane service request, according to the current specification TS 24.301, since the control plane service request and the uplink generic NAS transmission (which comprises LPP or LCS messages) must be sent separately over the radio link, it results in inefficient transmission of LPP/LCS messages during the LPP/LCS program. As shown in TABLE 1 below, the control plane service request only comprises the ESM message container information element (IE) and the NAS message container IE for data transmission. The ESM message container IE is only allowed to comprise the ESM data transport message and the NAS message container IE is used for SMS transmission.

**TABLE 1: the content of the control plane service request message**

| **Information element identifier (IEI)** | **Information element** | **Type/Reference** | **Presence** | **Format** | **Length** |
|---|---|---|---|---|---|
| | Protocol discriminator | Protocol discriminator 9.2 | M | V | 1/2 |
| | Security header type | Security header type 9.3.1 | M | V | 1/2 |
| | Control plane service request message identity | Message type 9.8 | M | V | 1 |
| | Control plane service type | Control plane service type 9.9.3.47 | M | V | 1/2 |
| | NAS key set identifier | NAS key set identifier 9.9.3.21 | M | V | 1/2 |
| 78 | ESM message container | ESM message container 9.9.3.15 | O | TLV-E | 3-n |
| 67 | NAS message container | NAS message container 9.9.3.22 | O | TLV | 4-253 |
| 57 | EPS bearer context status | EPS bearer context status 9.9.2.1 | O | TLV | 4 |
| D- | Device properties | Device properties 9.9.2.0A | O | TV | 1 |

Wherein the ESM message container is used for user data transmission (only ESM data transmission is allowed), and the NAS message container is used for SMS transmission.

Currently, how to effectively transmit the LPP/LCS messages of higher layer (higher than NAS) application protocol data has not been resolved in TS 24.301. This is especially important for power-sensitive IoT devices that need to call location services frequently, such as tracking applications.

### Brief Summary of the Invention

The invention relates to a NAS signalling reduction method for LCS and LPP procedures initiated by UE in EMM idle mode or EMM registration state.

The method of the present invention comprises: initiating an LPP or LCS procedure; encapsulating the LPP or LCS message in a specific IE; and sending the LPP or LCS message by using the specific IE.

Wherein the LPP/LCS message is encapsulated into the IE in the content of the control plane service request message.

Wherein the specific IE is the EMM message container IE.

Wherein the EMM message container IE has an EMM message container type indication.

Wherein the specific IE is the uplink generic NAS transport message container IE.

Wherein the specific IE is the payload container IE.

Wherein the load container IE has a load container type indication.

Wherein the specific IE is the NAS message container IE.

Wherein the NAS message container IE has a NAS message container type indication.

Wherein the specific IE is a new NAS message container IE.

Wherein the specific IE is a new generic message container IE.

Wherein the new generic message container IE has a generic message container type indication and/or additional information IE.

The present invention also provides an MME method that supports CIoT EPS optimization. The method comprises: receiving an initial UE message with an LPP or LCS message included in a NAS PDU, extracting the LPP or LCS message from the NAS PDU, and sending the LPP or LCS message through the LCS-AP protocol.

Wherein the LPP or LCS message is a connection-oriented information message.

### Brief Description of the Drawings

The present invention can be more fully understood by reading the subsequent detailed description and examples with references made to the accompanying drawings, wherein:
FIG. 1 shows a block diagram of a wireless network.
FIG. 2 shows the process in which the UE initiates a location service request in the idle mode.
FIG. 3 shows a process in which the UE initiates a location service request in the connected mode.
FIG. 4 illustrates a flowchart of the UE sending an LCS message to the network.
FIG. 5 shows a flowchart of the MME sending the LCS message to the E-SMLC when receiving the initial UE message.
FIG. 6 shows a flowchart of the UE sending the LPP message to the network.
FIG. 7 shows a flow chart of the MME sending the LPP message to the E-SMLC when receiving the initial UE message.

### Detailed Description of the Invention

The invention relates to a NAS signalling reduction method for LCS and LPP procedures initiated by UE in EMM idle mode and EMM registration state. Please note that in the following, "idle mode" means that the UE is in an EMM idle mode and an EMM registration state; "connected mode" means that the UE is in an EMM connection mode and an EMM registration state.

The disclosed method involves multiple methods of encapsulating LPP/LCS messages into a control plane service request.

This makes it possible for the UE and the eNB to transmit LPP/LCS messages during the RRC connection establishment procedure, and can be regarded as an extension of the control plane EPS CIoT optimization.

The embodiments described below are preferred embodiments for implementing the present invention, and the embodiments are described with reference to the accompanying drawings. In order to solve the above problems, this specification proposes the following solutions.

The technology described in this specification for transmitting LCS and LPP-related messages can be used in various wireless networks and radio technologies, including those technologies defined by the organization named "3rd Generation Partnership Project (3GPP)" and "3rd Generation Partnership Project 2 (3GPP2)". For example, these technologies can be used to implement the Long Term Evolution (LTE) network of the Evolved Universal Terrestrial Radio Access Network (E-UTRAN) defined by 3GPP. LTE is part of the 3GPP Evolved Packet System (EPS). LTE, E-UTRA and EPS are described in documents from 3GPP. These technologies can also be used in other wireless networks and other radio technologies.

The technology described in this specification can also be used for location solutions or architectures that can support various control levels of location services. Location service refers to any service based on or related to location information. The location information may comprise any information related to the location of the UE, for example, location estimation, measurement, and so on. Location services may comprise positioning, which refers to the function of determining the geographic location of a target UE. In the location solution of the control plane, the messages of supporting location services can be carried as part of the signaling passed between various network entities, and the various network entities generally have different protocols, interfaces, and signaling messages depending on the network.

The techniques described herein can also be used for various positioning protocols, such as (i) the LTE positioning protocol (LPP) defined by 3GPP, the radio resource LCS protocol (RRLP), and the radio resource control (RRC) and (ii) C.S0022 (also known as IS-801) defined by 3GPP2. The positioning protocol can be used to coordinate and control the positioning of the UE.

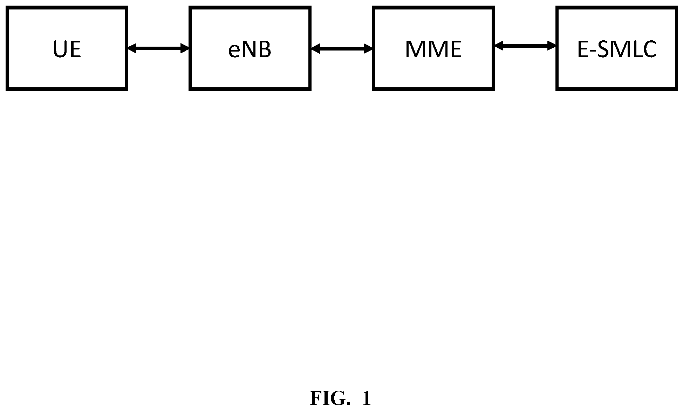

For clarity, LTE terms are used in most of the description below. Those skilled in the art understand the meaning of each term and the relationship between commonly used terms, so this specification does not provide further explanation. FIG. 1 shows a block diagram of a wireless network, which can be an LTE network or other wireless network. The UE can communicate with an eNB in a radio access network (RAN) to obtain communication services. The RAN may include other network entities that are not shown in FIG. 1 for simplicity and may also be referred to as Evolved Universal Terrestrial Radio Access Network (E-UTRAN). The eNB may also be regarded as a base station, a Node B, an access point, and so on. The UE may also be regarded as a mobile station, a terminal, an access terminal, a subscriber unit, a station, and so on. The UE may be a cell phone, a personal digital assistant (PDA), a wireless device, a wireless modem, a wireless router, a laptop computer, a telemetry device, a tracking device, and so on.

The eNB can communicate with the MME, and the MME can perform various control functions, such as mobility management, gateway selection, authentication, bearer management, and so on. The MME and E-SMLC can be simplified into other network communication entities not shown in FIG. 1. The E-SMLC may support UE-based, UE-assisted, network-based, and/or network-assisted positioning methods and may support one or more MMEs. The E-SMLC can perform various functions to support location services.

For LTE, LCS, NAS, MAC, RLC, PDCP, RRC, S1-AP, SCTP and IP are described in 3GPP TS 23.271, 3GPP TS 24.301, 3GPP TS 36.321, 3GPP TS 36.322, 3GPP TS 36.323, 3GPP TS 36.331, 3GPP TS 36.413, RFC 2960, RFC 791 and 2460, respectively. The public can obtain the 3GPP TS documents from 3GPP, and the RFC documents from the Internet Engineering Task Force (IETF).

The UE may exchange (e.g., send and/or receive) LPP/LCS messages about positioning services with the E-SMLC. These LPP/LCS messages are transmitted as efficiently as possible between the UE and the E-SMLC via network entities such as the eNB and the MME.

According to an aspect of the present invention, the messages about location services (e.g., LPP/LCS messages) exchanged between the UE and the E-SMLC can be encapsulated in a NAS message and transmitted via the network entities such as the eNB and the MME. The NAS message can be used to transmit the EPS mobility management (EMM) message and the EPS session management (ESM) message exchanged between the MME and the UE. The functionality of the NAS can be extended to support the transmission of LPP/LCS related message.

The LCS related message (for example, the LPP message) can be exchanged between the UE and the E-SMLC. The LCS related message can be encapsulated in the NAS message for transmission between the UE and the MME. These NAS messages can be further encapsulated in the RRC message for transmission between the UE and the eNB using various protocols for the above entities. These NAS messages may also be encapsulated in a S1AP NAS transport message (which is a message about S1AP) for transmission between the eNB and the MME. In addition, the LCS related message can also be encapsulated in the LCS-AP message for transmission between the MME and the E-SMLC.

It is more efficient to transmit LCS-related messages (for example, LPP messages) contained in the NAS messages between the UE and the MME than using some alternative protocols, for example, less demanding implementation, less testing, and/or less signaling. The NAS is used between the MME and the UE to transmit messages related to mobility management and session management. The extending NAS to transmit the LCS-related message may reuse existing protocols and may not require the definition, implementation, and testing of new protocols. In addition, the transmission of the LCS-related messages within the NAS message may not add additional impact to the eNB (currently, the impact of the transmission of the EMM and the ESM messages on the eNB).

### Embodiment 1: UE initiates a location service request process in the idle mode

### (Take MOLR OTDOA as an example)

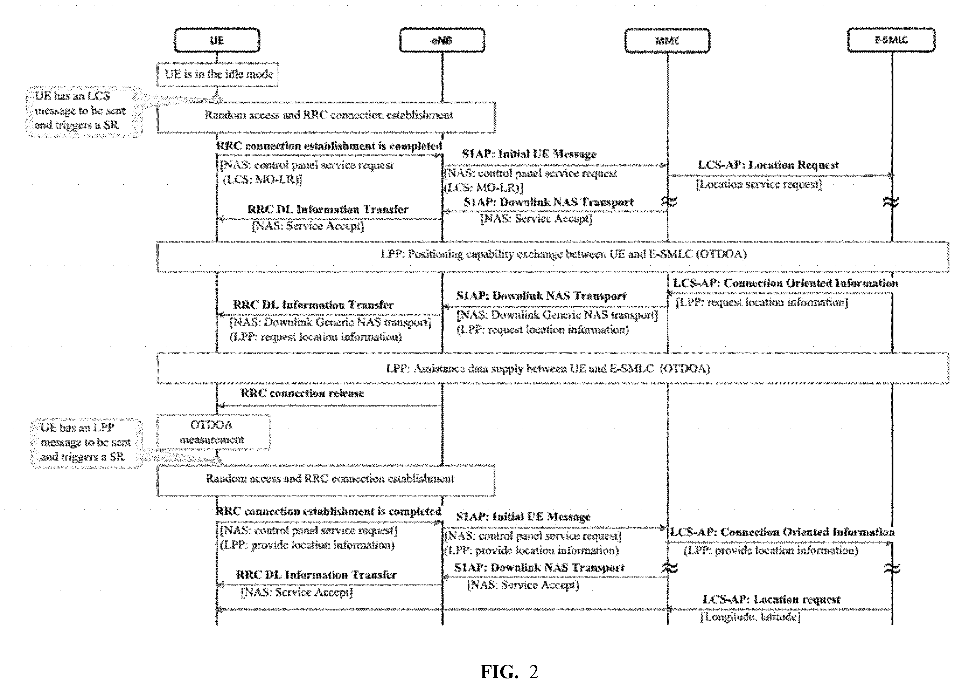

FIG. 2 shows the process in which the UE initiates a location service request in the idle mode.

As shown in FIG. 2, the UE is in the idle mode and needs to use the location service. The UE has an LCS message to be sent and triggers a service request (SR) process. The random access and RRC connection establishment are performed between the UE and the eNB.

After the random access and RRC connection establishment, the UE sends an RRC connection setup complete message carrying a NAS message to the eNB, wherein the NAS message comprises an LCS related message. The LCS related message can be exchanged between the UE and the E-SMLC. After the eNB receives the RRC message, the eNB sends the S1AP message INITIAL UE MESSAGE to the MME, and forwards the NAS message to the MME, wherein the LCS related message can be encapsulated in the NAS message for transmission between the UE and the MME. In another embodiment, the NAS message may also be encapsulated in a S1AP NAS transport message (which is a message about S1AP) for transmission between the eNB and the MME. After the MME receives the NAS message, the MME sends the LCS-AP message LOCATION REQUEST to the E-SMLC, wherein the LCS related message can be encapsulated in the LCS-AP message for transmission between the MME and the E-SMLC, so that the E-SMLC understands that the UE has a demand for location services.

The MME sends an S1AP message (S1AP: Downlink NAS Transport) to the eNB and forwards the NAS message (NAS: Service Accept) to the eNB. The eNB transfers the NAS message (NAS: Service Accept) to the UE in the RRC DL information transfer message.

The positioning capability exchange is realized between the E-SMLC and the UE through the OTDOA positioning mode.

Specifically, when the E-SMLC needs to send an LPP message to the UE as a part of the LPP positioning activity, the E-SMLC sends the LCS-AP (LCS-AP: Connection Oriented Information) carrying the LPP to the MME. The MME comprises a session identifier/routing identifier, which is associated with the positioning session between the MME and the E-SMLC. The MME then forwards the NAS in the S1AP message (S1AP: Downlink NAS Transport) to the eNB. The eNB forwards the NAS message (NAS: Downlink Generic NAS transport) in the RRC DL information transfer message to the UE.

The UE receives assistance data from the E-SMLC for positioning measurement. Subsequently, the eNB sends an RRC connection release message to the UE. UE performs the OTDOA measurement. The UE has the LPP message to be sent and triggers the CPSR. The random access and RRC connection establishment are performed between the UE and the eNB.

After the random access and RRC connection establishment, the LPP-related message is exchanged again between the UE and the E-SMLC. The UE sends an RRC connection setup complete message carrying the NAS message to the eNB. The carried NAS message at this time is a control panel service request. The LPP-related message, which is used to providing location information, is encapsulated in the NAS message. The eNB sends the S1AP message (S1AP: initial UE) to the MME. The LPP-related message can be encapsulated in the NAS message so that the LPP-related message can be transmitted between the UE and the MME. In other embodiments, these NAS message can also be encapsulated in the S1AP NAS transport message (which is the message about S1AP) for transmission between the eNB and the MME. The MME sends the LCS-AP (LCS-AP: Connection Oriented Information) message to the E-SMLC. The LPP-related message can be encapsulated in the LCS-AP message for transmission between the MME and the E-SMLC.

The MME forwards the NAS (NAS: Service Accept) information in the S1AP (S1AP: Downlink NAS Transport) message to the eNB. The eNB forwards the NAS message in the RRC DL information transfer message to the UE. The E-SMLC can also transmit the LCS-AP (LCS-AP: Location Response) message including the longitude and latitude to the UE via the MME and the eNB.

### Embodiment 2: UE initiates location service request process in the connected mode

### (Take MOLR OTDOA as an example)

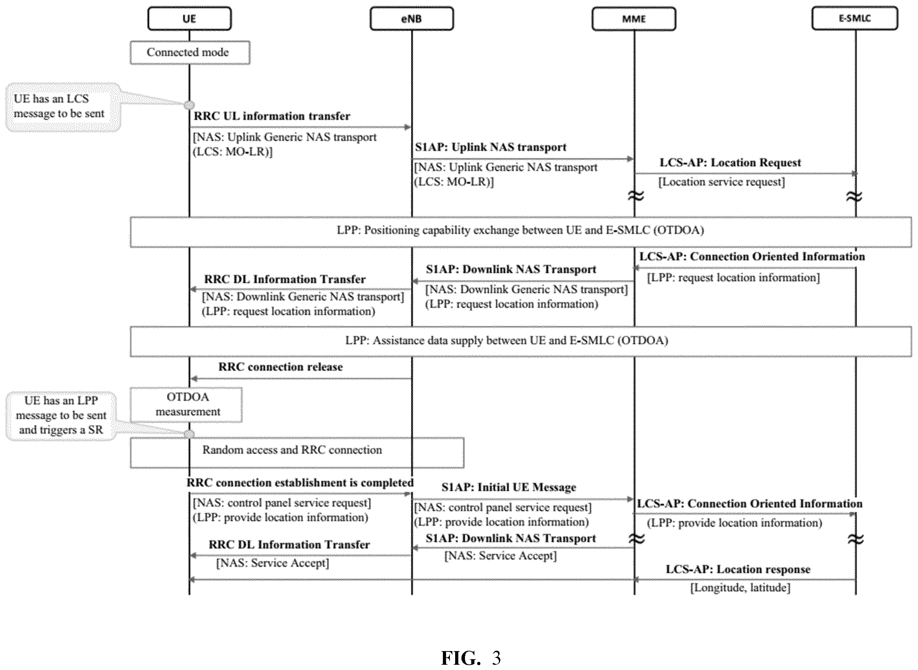

FIG. 3 shows a process in which the UE initiates a location service request in the connected mode.

As shown in FIG. 3, the UE is in the connected mode and has an LCS message to be sent.

The UE sends an RRC UL information transfer message carrying the NAS message to the eNB. The LCS-related message can be exchanged between the UE and the E-SMLC, and the LCS-related message can be encapsulated in the NAS message for transmission between the UE and the MME. The eNB sends the S1AP (S1AP: Uplink NAS Transport) message to the MME. The NAS message can also be encapsulated in the S1AP (S1AP: Uplink NAS Transport) message (which is a message about S1AP) for transmission between the eNB and the MME. The MME sends the LCS-AP (LCS-AP: location request) message to the E-SMLC, wherein the LCS-related message can be encapsulated in the LCS-AP message for transmission between the MME and the E-SMLC.

The positioning capability exchange is realized between the E-SMLC and the UE through the OTDOA positioning mode.

When the E-SMLC needs to send an LPP message to the UE as part of the LPP positioning activity, the E-SMLC sends the LCS-AP connection-oriented information (LCS-AP: Connection Oriented Information) carrying the LPP to the MME. The MME comprises a session identifier/routing identifier, which is associated with the positioning session between the MME and the E-SMLC. The MME then forwards the NAS transport message in the S1AP (S1AP: Downlink NAS Transport) message to the eNB. The eNB transfers the NAS transport message to the UE in the RRC DL information transfer message.

The UE receives assistance data from the E-SMLC for positioning measurement. Subsequently, the eNB sends an RRC connection release message to the UE. Next, the UE performs the OTDOA measurement. The UE has an LPP message to be sent and triggers an SR. The random access and RRC connection establishment are performed between the UE and the eNB.

After the random access and RRC connection establishment, the LPP-related message is exchanged again between the UE and the E-SMLC. The UE sends an RRC connection setup complete message carrying the NAS to the eNB. The LPP-related message can be encapsulated in the NAS message for transmission between the UE and the MME. The eNB sends the S1AP (S1AP: initial UE) message to the MME. The NAS message can also be encapsulated in the S1AP NAS transport message (which is a message about S1AP) for transmission between the eNB and the MME. The MME sends the LCS-AP (LCS-AP: Connection Oriented Information) message to the E-SMLC. The LPP-related message can be encapsulated in the LCS-AP message for transmission between the MME and the E-SMLC.

The MME forwards the NAS service accept (NAS: Service Accept) information in the S1AP downlink NAS transport (S1AP: Downlink NAS Transport) message to the eNB. The eNB transfers the NAS message in an RRC DL information transfer message to the UE.

The E-SMLC can also transmit the LCS-AP location response (LCS-AP: Location Response) message including the longitude and latitude to the UE via the MME and the eNB.

The following exemplarily describes an embodiment of sending an LCS/LPP message performed by the UE/MME.

### Embodiment 3: Method for the UE to send LCS message/LPP message

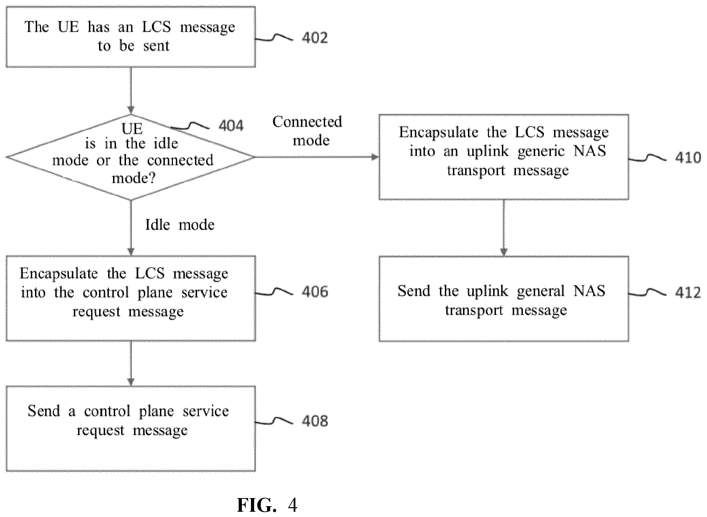

**Embodiment 3-1:** FIG. 4 illustrates a flowchart of the UE sending an LCS message to the network. As shown in FIG. 4, in step 402, the UE has an LCS message to be sent. Subsequently, in step 404, it is determined whether the UE is in the idle mode or the connected mode.

When the UE is in the idle mode, the process goes to step 406, and the UE encapsulates the LCS message into the control plane service request message. Subsequently, in step 408, the UE sends a control plane service request message.

When the UE is in the connected mode, in step 410, the UE encapsulates the LCS message into an uplink generic NAS transport message. Subsequently, in step 412, the UE sends the uplink general NAS transport message.

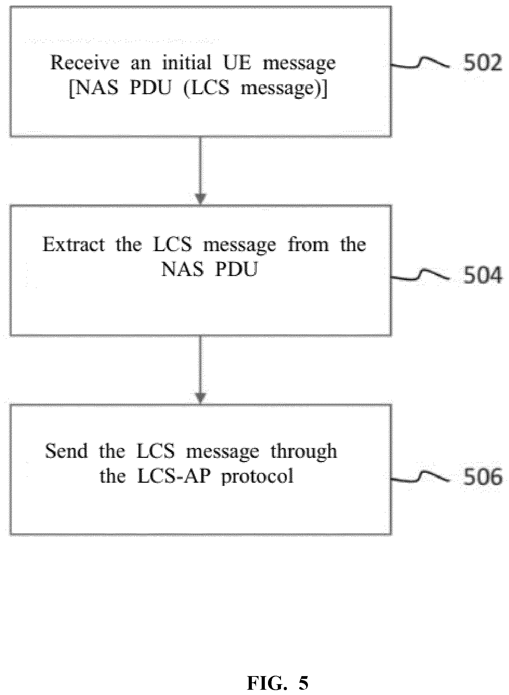

**Embodiment 3-2:** FIG. 5 shows a flowchart of the MME sending the LCS message to the E-SMLC when receiving the initial UE message. As shown in FIG. 5, in step 502, the MME receives an initial UE message [NAS PDU (LCS message)]. Subsequently, in step 504, the MME extracts the LCS message from the NAS PDU. Next, in step 506, the MME sends the LCS message through the LCS-AP protocol.

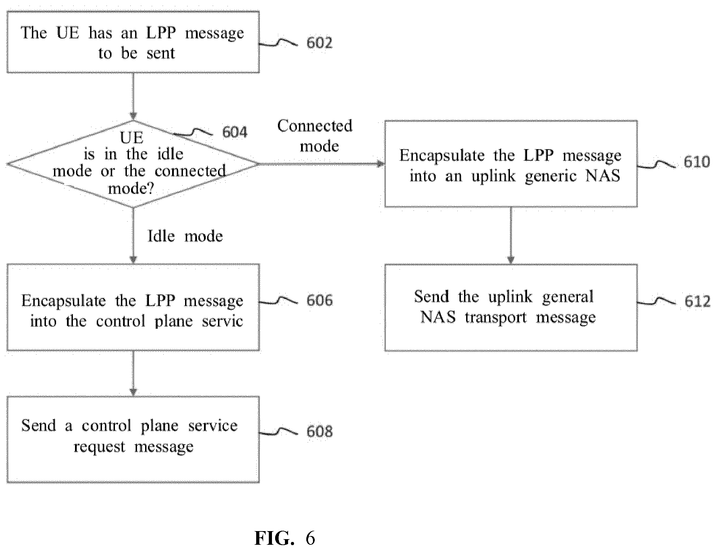

**Embodiment 3-3:** FIG. 6 shows a flowchart of the UE sending the LPP message to the network. As shown in FIG. 6, in step 602, the UE has an LPP message to be sent. Subsequently, in step 604, it is determined whether the UE is in the idle mode or the connected mode.

When the UE is in the idle mode, the process goes to step 606, and the UE encapsulates the LPP message into the control plane service request message. Subsequently, in step 608, a control plane service request message is sent.

When the UE is in the connected mode, in step 610, the UE encapsulates the LPP message into an uplink generic NAS transport message. Subsequently, in step 612, the UE sends the uplink general NAS transport message.

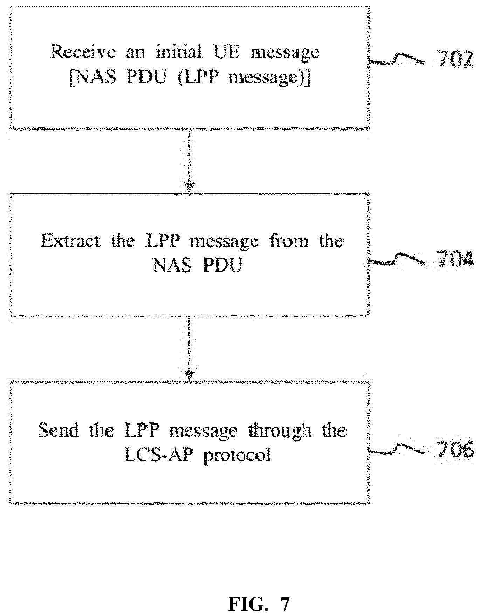

**Embodiment 3-4:** FIG. 7 shows a flow chart of the MME sending the LPP message to the E-SMLC when receiving the initial UE message. As shown in FIG. 7, in step 702, the MME receives an initial UE message [NAS PDU (LPP message)]. Subsequently, in step 704, retrieves the LPP message from the NAS PDU. Next, in step 706, sends the LPP message through the LCS-AP protocol.

### Embodiment 4: Method for encapsulating the LPP/LCS message into the control plane service request

The following embodiments provide multiple methods for encapsulating the LPP/LCS message into the control plane service request, which will be discussed one by one below.

### Embodiment 4-1: the EMM message container IE is added to the control plane service request

The optional IE "EMM message container" is added to the control plane service request, as shown in TABLE 2. The EMM message container may have an

EMM message container type indication. Please note that in TS 24.301, the UE may comprise an uplink generic NAS transport message. In one embodiment, the UE should not contain any EMM messages other than the uplink generic NAS transport messages.

**TABLE 2: Content of control plane service request message**

| **Information element identifier (IEI)** | **Information element** | **Type/Reference** | **Presence** | **Format** | **Length** |
|---|---|---|---|---|---|
| | Protocol discriminator | Protocol discriminator 9.2 | M | V | 1/2 |
| | Security header type | Security header type 9.3.1 | M | V | 1/2 |
| | Control plane service request message identity | Message type 9.8 | M | V | 1 |
| | Control plane service type | Control plane service type 9.9.3.47 | M | V | 1/2 |
| | NAS key set identifier | NAS key set identifier 9.9.3.21 | M | V | 1/2 |
| 78 | ESM message container | ESM message container 9.9.3.15 | O | TLV-E | 3-n |
| 67 | NAS message container | NAS message container 9.9.3.22 | O | TLV | 4-253 |
| 57 | EPS bearer context status | EPS bearer context status 9.9.2.1 | O | TLV | 4 |
| D- | Device properties | Device properties 9.9.2.0A | O | TV | 1 |
| xy | EMM message container | EMM message container 9.9.3.x | O | TLV-E | 3-n |

Wherein the information element of the EMM message container is shown in TABLE 3:

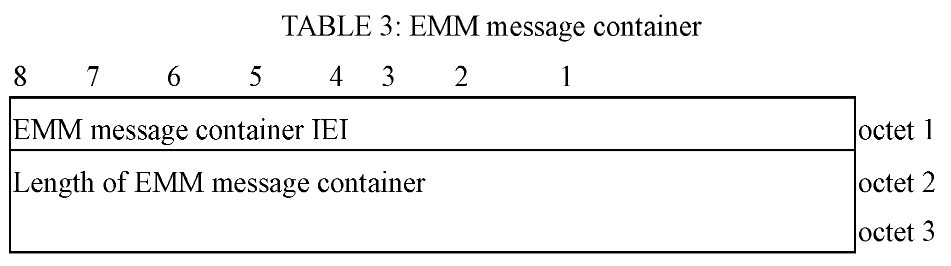

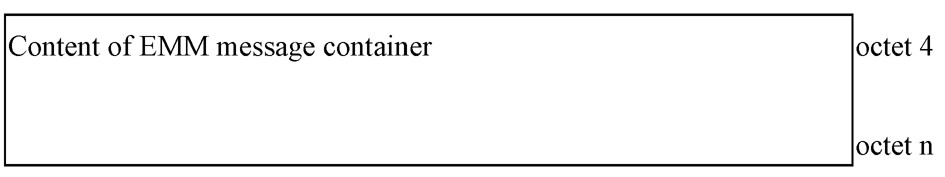

Wherein octet 4 to octet n (maximum 65535 octet) are the content of the EMM message container. The IE may contain any EMM PDU defined in subclause 8.2.

### Embodiment 4-2: the uplink generic NAS transport message container IE is added to the control plane service request

The optional IE "Uplink generic NAS transport message container" is added to the control plane service request, as shown in TABLE 4.

**TABLE 4: Content of the control plane service request message**

| **Information element identifier (IEI)** | **Information element** | **Type/Reference** | **Presence** | **Format** | **Length** |
|---|---|---|---|---|---|
| | Protocol discriminator | Protocol discriminator 9.2 | M | V | 1/2 |
| | Security header type | Security header type 9.3.1 | M | V | 1/2 |
| | Control plane service request message identity | Message type 9.8 | M | V | 1 |
| | Control plane service type | Control plane service type 9.9.3.47 | M | V | 1/2 |
| | NAS key set identifier | NAS key set identifier 9.9.3.21 | M | V | 1/2 |
| 78 | ESM message container | ESM message container 9.9.3.15 | O | TLV-E | 3-n |
| 67 | NAS message container | NAS message container 9.9.3.22 | O | TLV | 4-253 |
| 57 | EPS bearer context status | EPS bearer context status 9.9.2.1 | O | TLV | 4 |
| D- | Device properties | Device properties 9.9.2.0A | O | TV | 1 |
| xy | Uplink generic NAS transport message container | Uplink generic NAS transport message container 9.9.3.x | O | TLV-E | 3-n |

In the above table, a new IE is added: Uplink generic NAS transport message container. The added uplink generic NAS transport message container can be used for, for example, the LCS/LPP message transmission. Wherein the information elements of the uplink generic NAS transport message container can refer to TABLE 5 and TABLE 6:

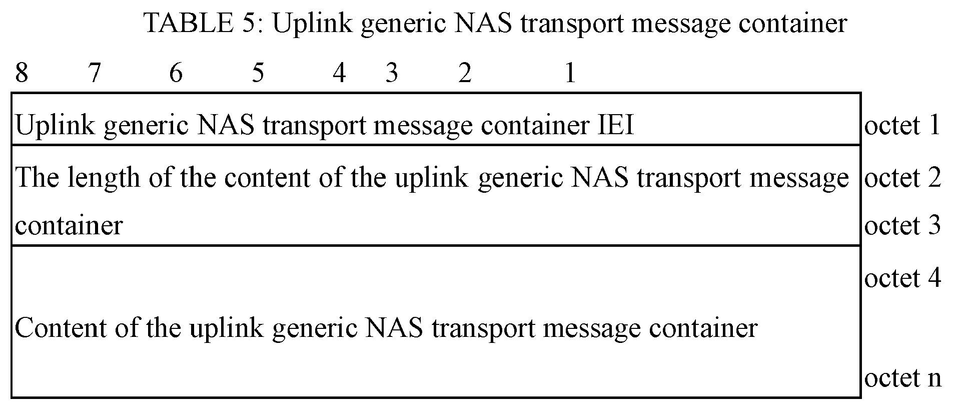

**TABLE 6: Content of the uplink generic NAS transport message container**

| **Information element identifier (IEI)** | **Information element** | **Type/Reference** | **Presence** | **Format** | **Length** |
|---|---|---|---|---|---|
| | Generic message container type | Generic message container type 9.9.3.42 | M | V | 1 |
| | Generic message container | Generic message container 9.9.3.43 | M | LV-E | 3-n |
| 65 | Additional information | Additional information 9.9.2.0 | O | TLV | 3-n |

Wherein the content of the uplink generic NAS transport message container in TABLE 5 can refer to TABLE 6.

### Embodiment 4-3: the usage of the NAS message container IE in the control plane service request is modified

Embodiment 4-3-1: the LCS/LPP message (in addition to SMS) is allowed to encapsulate in the NAS message container, as shown in TABLE 7.

**TABLE 7: Content of the control plane service request message**

| **Information element identifier (IEI)** | **Information element** | **Type/Reference** | **Presence** | **Format** | **Length** |
|---|---|---|---|---|---|
| | Protocol discriminator | Protocol discriminator 9.2 | M | V | 1/2 |
| | Security header type | Security header type 9.3.1 | M | V | 1/2 |
| | Control plane service request message identity | Message type 9.8 | M | V | 1 |
| | Control plane service type | Control plane service type 9.9.3.47 | M | V | 1/2 |
| | NAS key set identifier | NAS key set identifier 9.9.3.21 | M | V | 1/2 |
| 78 | ESM message container | ESM message container 9.9.3.15 | O | TLV-E | 3-n |
| Xx | NAS message container type | NAS message container type 9.9.3.xx | C | TV | 1 |
| 67 | NAS message container | NAS message container 9.9.3.22 | O | TLV | 4-65535 |
| 57 | EPS bearer context status | EPS bearer context status 9.9.2.1 | O | TLV | 4 |
| D- | Device properties | Device properties 9.9.2.0A | O | TV | 1 |

In the above table, a new IE: NAS message container type has been added. The content of the line Xx in the IEI column represents the new information added. When the UE wants to send an ESM message to the network, the UE should include the information element ESM message container. When the UE is in the EMM-IDLE mode and wants to send an application message to the network, the UE should include the information element NAS message container type. When the UE wants to send a pending SMS message, the UE may include the information element NAS message container type.

At the same time, the use of the row of IEI column 67 (i.e., NAS message container) is changed. The NAS message container IE is used not only for SMS transmission, but also for LPP/LCS message transmission. That is, the NAS message container IE may include the SMS message (i.e., CP-DATA, CP-ACK, or CP-ERROR), or application messages that depend on specific applications.

Optional IE: NAS message container type is a new optional information element (IE) in the control plane service request, which allows the UE to notify the network of the piggy-backed message contained in the NAS message container type. The NAS message container IE is used to specify the type of NAS message container content. The NAS message container type IE is encoded as shown in the following table. The EPS update result is the first type (type 1) IE:

**TABLE 8: EPS update result information element**

| 8 | 7 | 6 | 5 | | 4 | 3 | 2 | 1 | | |
|---|---|---|---|---|---|---|---|---|---|---|
| NAS message container type IEI | | | | | 0 reserve | NAS message container type value | | | | octet 1 |
| NAS message container type value (octet 1, bit 1-3) | | | | | | | | | | |
| Bits | | | | | | | | | | |
| 3 | 2 | 1 | | | | | | | | |
| 0 | 0 | 0 | | Reserve | | | | | | |
| 0 | 0 | 1 | | SMS | | | | | | |
| 0 | 1 | 0 | | LTE positioning protocol (LPP) message container | | | | | | |
| 1 | 0 | 0 | | Location service message container | | | | | | |
| Reserve all other values. | | | | | | | | | | |
| Bit 4 of octet 1 is reserved and coded as 0. | | | | | | | | | | |

### Embodiment 4-3-2: the LCS / LPP message is allowed to encapsulate in the NAS message container 2, as shown in TABLE 9.

**TABLE 9: Content of the control plane service request message**

| **Information element identifier (IEI)** | **Information element** | **Type/Reference** | **Presence** | **Format** | **Length** |
|---|---|---|---|---|---|
| | Protocol discriminator | Protocol discriminator 9.2 | M | V | 1/2 |
| | Security header type | Security header type 9.3.1 | M | V | 1/2 |
| | Control plane service request message identity | Message type 9.8 | M | V | 1 |
| | Control plane service type | Control plane service type 9.9.3.47 | M | V | 1/2 |
| | NAS key set identifier | NAS key set identifier 9.9.3.21 | M | V | 1/2 |
| 78 | ESM message container | ESM message container 9.9.3.15 | O | TLV-E | 3-n |
| 67 | NAS message container | NAS message container 9.9.3.22 | O | TLV | 4-253 |
| 57 | EPS bearer context status | EPS bearer context status 9.9.2.1 | O | TLV | 4 |
| D- | Device properties | Device properties 9.9.2.0A | O | TV | 1 |
| xx | NAS message container 2 | NAS message container 2 9.9.3.22 | O | TLV-E | 5-n |

In the above table, the content in the row of IEI column xx represents the new information added, and a new IE: NAS message container 2 has been added. When the UE is in the EMM-IDLE mode and has a pending application message to be sent, the UE should include this information element.

This IE is used to encapsulate the application message passed between the UE and the network. The IE may be, for example, a dedicated IE used for the LCS/LPP message transfer in the CPSR. The NAS message container IE is coded as shown in the following table. The NAS message container is the sixth type (type 6) IE, with a minimum length of 4 octet and a maximum length of 65536 octet:

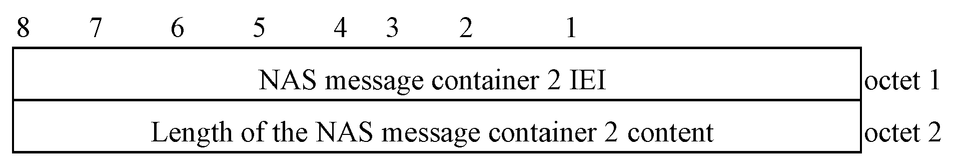

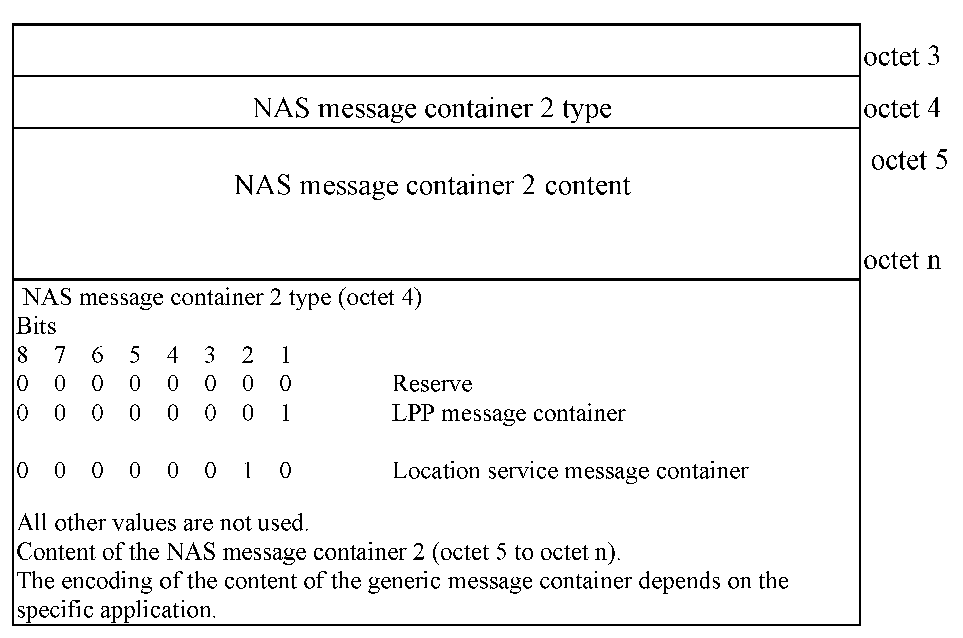

### Embodiment 4-3-3: the LCS / LPP message is allowed to encapsulate in the generic message container IE, as shown in TABLE 11.

**TABLE 11: Content of the control plane service request message**

| **Information element identifier (IEI)** | **Information element** | **Type/Reference** | **Presence** | **Format** | **Length** |
|---|---|---|---|---|---|
| | Protocol discriminator | Protocol discriminator 9.2 | M | V | 1/2 |
| | Security header type | Security header type 9.3.1 | M | V | 1/2 |
| | Control plane service request message identity | Message type 9.8 | M | V | 1 |
| | Control plane service type | Control plane service type 9.9.3.47 | M | V | 1/2 |
| | NAS key set identifier | NAS key set identifier 9.9.3.21 | M | V | 1/2 |
| 78 | ESM message container | ESM message container 9.9.3.15 | O | TLV-E | 3-n |
| 67 | NAS message container | NAS message container 9.9.3.22 | O | TLV | 4-253 |
| 57 | EPS bearer context status | EPS bearer context status 9.9.2.1 | O | TLV | 4 |
| D- | Device properties | Device properties 9.9.2.0A | O | TV | 1 |
| xx | Generic message container type | Generic message container type 9.9.3.42 | O | TV | 1 |
| xy | Generic message container | Generic message container 9.9.3.43 | O | TLV-E | 3-n |
| xz | Additional information | Additional information 9.9.2.0 | O | TLV | 3-n |

In the above table, the contents of the rows xx, xy and xz in the IEI column indicate the new information added. The new IEs are: Generic message container type, Generic message container, and Additional information.

When the UE is in the EMM-IDLE mode and has a pending application message to be sent, the UE may include a generic message container type IE.

When the UE is in the EMM-IDLE mode and has a pending application message to be sent, the UE may include a generic message container IE.

When the UE wants to send any additional information, the UE may include additional information IEs.

**Embodiment 4-4:** the LCS/LPP message (in addition to SMS) is allowed to be encapsulated in one or more payload container IEs, as shown in TABLE 12 and TABLE 13. This method can support multiple payloads to include multiple messages, for example, one or more SMS messages and one or more LCS/LPP messages, in one IE.

**TABLE 12: Load container information element**

| Load container type value (octet 1) | | | | |
|---|---|---|---|---|
| Bits | | | | |
| 4 | 3 | 2 | 1 | |
| 0 | 0 | 0 | 1 | S1 SM information |
| 0 | 0 | 1 | 0 | SMS |
| 0 | 0 | 1 | 1 | LTE positioning protocol (LPP) message container |
| 0 | 1 | 1 | 1 | Location service message container |
| 1 | 1 | 1 | 1 | Multiple loads |
| Reserve all other values. | | | | |
| Note: the value "multiple loads" is used only when the content of the load container contains multiple loads. | | | | |

**TABLE 13: Content of the control plane service request message**

| **Information element identifier (IEI)** | **Information element** | **Type/Reference** | **Presence** | **Format** | **Length** |
|---|---|---|---|---|---|
| | Protocol discriminator | Protocol discriminator 9.2 | M | V | 1/2 |
| | Security header type | Security header type 9.3.1 | M | V | 1/2 |
| | Control plane service request message identity | Message type 9.8 | M | V | 1 |
| | Control plane service type | Control plane service type 9.9.3.47 | M | V | 1/2 |
| | NAS key set identifier | NAS key set identifier 9.9.3.21 | M | V | 1/2 |
| 57 | EPS bearer context status | EPS bearer context status 9.9.2.1 | O | TLV | 4 |
| D- | Device properties | Device properties 9.9.2.0A | O | TV | 1 |
| TBD | Payload Container type | Payload Container type 9.11.3.40 | O | TV | 1/2 |
| TBD | Payload Container | Payload Container 9.11.3.39 | O | TLV-E | 3-65537 |

In the above table, the content of the row TBD in the IEI column represents the new information added. The newly added IEs are: Payload Container type and Payload Container.

It should be noted that in this specification, some tables are not completed or in complete form. For sake of brevity, this specification only provides parts related to the innovations of the present invention. After reading this specification, those skilled in the art will fully understand the meaning of the tables and understand the implementation modes provided by the present invention, and can easily modify the embodiments of the present invention or combine different embodiments disclosed in the present invention on the basis of the specification of this application.

In addition, from the perspective of the RAN, according to the method disclosed in the present invention, the UE can save uplink NPUSCH messages. In the absence of UL authorization, the UE can save random access procedures in the connected mode. In addition, although some embodiments in this specification take MOLR as an example, the main idea of the present invention (that is, the LPP/LCS message is allowed to be included in the control plane service request) is applicable to MO-LR (Mobile Originating-Location Request) and MT-LR (Mobile Terminal-Location Request). Those skilled in the art will understand that the spirit of the present invention is applied to the specific implementation of MT-LR after reading this specification, so the description will not be repeated in this specification.

While the disclosure has been described by way of example and in terms of the preferred embodiments, it should be understood that the disclosure is not limited to the disclosed embodiments. On the contrary, it is intended to cover various modifications and similar arrangements (as would be apparent to those skilled in the art). Therefore, the scope of the appended claims should be accorded the broadest interpretation so as to encompass all such modifications and similar arrangements.

## Claims

1. A message transmission method, used in a device supporting IoT, wherein the message transmission method comprises:
initiating a positioning procedure;
encapsulating a positioning-related message in a specific information element (IE); and
sending the positioning-related message by the specific IE.

2. The message transmission method of claim 1, wherein the positioning-related message is encapsulated into the specific IE in the content of a control plane service request message.

3. The message transmission method of claim 2, wherein the specific IE is an EMM message container IE.

4. The message transmission method of claim 3, wherein the EMM message container IE has an EMM message container type indication.

5. The message transmission method of claim 2, wherein the specific IE is an uplink generic NAS (Non-access stratum) transport message container IE.

6. The message transmission method of claim 2, wherein the specific IE is a payload container IE.

7. The message transmission method of claim 6, wherein the payload container IE has a payload container IE type indication.

8. The message transmission method of claim 2, wherein the specific IE is a NAS message container IE.

9. The message transmission method of claim 8, wherein the NAS message container IE has a NAS message container type indication.
9. The message transmission method of claim 2, wherein the specific IE is a new NAS message container IE used to encapsulate the positioning-related message.

10. The message transmission method of claim 2, wherein the specific IE is a new generic message container IE.

11. The message transmission method of claim 10, wherein the new generic message container IE has a generic message container type indication and/or an additional information IE.

12. The message transmission method of claim 1, wherein the positioning-related message is an LTE positioning protocol/ location service message.

13. The message transmission method of claim 1, wherein the message transmission method is suitable for the location request terminated by the mobile terminal and/or the location request initiated by the mobile terminal.

14. A message transmission method, comprising:
receiving an initial device message, where the initial device message comprises a positioning-related message encapsulated in a specific information element (IE);
retrieving the positioning-related message from the initial device message; and
sending the positioning-related message through the LCS-AP protocol.

15. The message transmission method of claim 14, wherein the positioning-related message is encapsulated into an IE in the content of a control plane service request message.

16. The message transmission method of claim 14, wherein the positioning-related message is an LTE positioning protocol/ location service message.
